Europäisches Patentamt

**European Patent Office**

**Office européen des brevets**

(11) Veröffentlichungsnummer: **0 121 577**
A1

# (12) EUROPÄISCHE PATENTANMELDUNG

(21) Anmeldenummer: 83103261.0

(22) Anmeldetag: 02.04.83

(51) Int. Cl.³: **B 09 B 1/00,** E 21 F 15/00,
B 65 G 53/30, G 21 F 9/34

(43) Veröffentlichungstag der Anmeldung: **17.10.84**
**Patentblatt 84/42**

(84) Benannte Vertragsstaaten: **AT BE DE FR GB IT NL SE**

(71) Anmelder: **PREUSSAG Aktiengesellschaft Metall,**
**Rammelsberger Strasse 2, D-3380 Goslar 1 (DE)**

(72) Erfinder: **Janssen, Klaus, Dipl.-Ing., Kaisertorstrasse 3,**
**D-3380 Goslar 1 (DE)**
Erfinder: **Meier, Jürgen, Dipl.-Ing., Hübichweg 25,**
**D-3362 Bad Grund (DE)**
Erfinder: **Frank, Siegfried, Dipl.-Ing., Hilfe Gottes 7,**
**D-3362 Bad Grund (DE)**

(74) Vertreter: **König, Reimar, Dr.-Ing. et al, Patentanwälte**
**Dr.-Ing. Reimar König Dipl.-Ing. Klaus Bergen**
**Wilhelm-Tell-Strasse 14 Postfach 260162,**
**D-4000 Düsseldorf 1 (DE)**

(54) **Verfahren zum Beseitigen oder Zwischenlagern von Abfällen.**

(57) Die Erfindung bezieht sich auf ein Verfahren zum Beseitigen oder Zwischenlagern feinteiliger und/oder flüssiger und durch Grobgutbeimengung angereicherter Abfallstoffe, bei dem ein Feststoff/Flüssigkeits-Gemisch mittels einer Verdrängungspumpe durch Rohrleitungen in natürliche oder künstliche über- oder untertägige Räume gefördert wird. Um das Versatzverfahren auch in solchen Fällen, in denen ein grobkörniges Beimengmaterial nicht anfällt bzw. nicht vorhanden ist, ohne aufwendiges und teures Herbeischaffen eines solchen Zusatzmaterials möglich zu machen, wird der dem Material bzw. Stoff beizusetzenden Grobgutanteil unmittelbar aus dem zu verbringenden Feinen selbst abgetrennt/gewonnen.

ACTORUM AG

0121577

- 1 -

34 886 K

PREUSSAG Aktiengesellschaft Metall, Rammelsberger Straße 2, 3380 Goslar 1

"Verfahren zum Beseitigen oder Zwischenlagern von Abfällen"

Die Erfindung bezieht sich auf ein Verfahren zum Beseitigen oder Zwischenlagern feinteiliger und/oder flüssiger und durch Grobgutbeimengung angereicherter Abfallstoffe, bei dem ein Feststoff/Flüssigkeitsgemisch mittels einer Verdrängungspumpe durch Rohrleitungen in nätürliche oder künstliche über- oder untertägige Deponien und Räume gefördert und dort deponiert wird.

Ein derartiges Verfahren ist aus der europäischen Offenlegungsschrift OO 26 301 bekannt. Es wird hier ein unter 20 Gew.-% Transportflüssigkeit, vorzugsweise Wasser enthaltendes Gemisch mittels einer Kolbenpumpe in den Hohlraum gefördert. Damit lassen sich feinstkörnige, beispielsweise staubförmige oder auch pastöse und schlammförmige Abfallstoffe deponieren, ohne daß bezüglich der Transportflüssigkeit Probleme auftreten und/oder - im Falle einer untertägigen Lagerung - ein nicht hinreichend gebirgsmechanisch stabiler Versatz in einem natürlichen oder künstlichen Hohlraum entsteht.

Das bekannte Verfahren setzt voraus, daß dem Feinen, d.h. dem feinst- bzw. feinkörnigen Abfallmaterial, das in erster Linie zu beseitigen ist, ein bestimmter Grobanteil zugemischt wird. Im Endeffekt liegt für den Pumpversatz ein Transportgemisch aus fein- und grobkörnigem Material mit einem verhältnismäßig geringem Wassergehalt vor, wobei der Grundsatz gilt, daß die für die Pumpförderung erforderliche Mindestmenge an Transportflüssigkeit umso geringer ist, je höher der Grobgutanteil im Gemisch ist.

Der Grad der Pumpbarkeit des Gemisches hängt andererseits vom Vorhandensein von mittlerem und/oder feinem Korn in einem Volumenanteil ab, der denjenigen des theoretischen Porenvolumens des geschütteten Grobkorns übertrifft. Ein kontinuierliches Gleiten des Gutes in der Pumpleitung ist nämlich nur dann gegeben, wenn sich nicht aus gröberen Körnern Brücken, d.h. Verstopfungen über dem Rohrquerschnitt bilden können. Hierzu ist ein bestimmter Anteil von feinerem Gut erforderlich, der die gröberen Körner in der Mischung voneinander getrennt hält. Ein derartiges Kornspektrum und die Konsistenz der Mischung verhindern weitgehend Relativbewegungen der Einzelkörner, so daß diese während der Pumpförderung in ihrer relativen Lage fixiert werden und eine Entmischungsgefahr nicht besteht. Eine besondere Rolle bezüglich der Pumpbarkeit und des Fördermittelverschleißes spielt das Feinstkorn, dem die zusätzliche Aufgabe zufällt, zwischen

- 3 -

dem hochkonsistenten Fördergut und der Rohrleitungswandung einen Gleitfilm herzustellen. Dieser Gleitfilm
entsteht im Wege einer Druckentmischung infolge des
Wasseranteils im Gemisch.

Im Hinblick auf die Abfallbeseitigung ist es als ein
Nachteil des beschriebenen Verfahrens anzusehen, daß
zwingend immer ein grobkörniges, kiesähnliches Gut
vorhanden sein bzw. beigestellt werden muß, wenn der
eigentliche Abfallstoff in feinkörniger Form vorliegt.

Unter Berücksichtigung der vorerwähnten Überlegungen
beim Mischen des Materials, liegt der Erfindung daher
die Aufgabe zugrunde, die Anwendung des Verfahrens
insbesondere auch in den Fällen, in denen ein grobkörniges Material nicht anfällt bzw. nicht vorhanden ist,
ohne aufwendiges und teures Herbeischaffen eines Zusatzmaterials möglich zu machen.

Die Lösung dieser Aufgabe besteht darin, daß der dem
Material bzw. Stoff beizusetzende Grobgutanteil unmittelbar aus dem zu verbringenden Feinen selbst abgetrennt/gewonnen wird. Indem somit der notwendige Grobgutanteil aus dem zu beseitigenden feinstkörnigen
Abfallmaterial abgetrennt und zum Vergröbern nach einem Vorschlag der Erfindung agglomeriert, vorzugsweise
pelletiert wird, ergibt sich eine besondere wirtschaftliche Verfahrensweise, da kostspieliger Deponieraum
nur noch entsprechend dem effektiven Abfallvolumen
bemessen werden muß.

- 4 -

Das Verfahren läßt sich vorteilhaft zum Entsorgen von radioaktivem Feinstkornabfall anwenden. Wie auch bei der Beseitigung anderer umweltgefährdender Abfallstoffe, kommt hierbei wesentlich zum Tragen, daß neben der geringen Transportflüssigkeitsmenge ein Rohrleitungstransport ermöglicht ist, und zwar innerhalb eines geschlossenen Systems zwischen Aufgabeort und Verbringungsort. Das schließt jede Art von Emmission aus. Da der Grobgutanteil aus dem arteigenen Material gewonnen wird, lassen sich die gefährlichen Abfallstoffe in weitestgehend konzentrierter Form und daher in verhältnismäßig kleinen Mengen deponieren.

- 5 -

PREUSSAG Aktiengesellschaft Metall, Rammelsberger Straße 2, 3380 Goslar 1

"Verfahren zum Beseitigen oder Zwischenlagern von Abfällen"

Patentansprüche:

1. Verfahren zum Beseitigen oder Zwischenlagern feinteiliger und/oder flüssiger und durch Grobgutbeimengung angereicherter Abfallstoffe, bei dem ein Feststoff/Flüssigkeits-Gemisch mittels einer Verdrängungspumpe durch Rohrleitungen in natürliche oder künstliche über- oder untertägige Räume gefördert wird, dadurch gekennzeichnet, daß der dem Material bzw. Stoff beizusetzende Grobgutanteil unmittelbar aus dem zu verbringenden Feinen selbst abgetrennt/gewonnen wird.

2. Verfahren nach Anspruch 1, gekennzeichnet durch ein Agglomerieren des Feinen.

3. Verfahren nach Anspruch 2, gekennzeichnet durch ein Vergröbern des Feinen im Wege des Pelletierens.

4. Anwendung des Verfahrens nach einem oder mehreren der Ansprüche 1 bis 3 zum Entsorgen von radioaktivem Feinstkornabfall.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,D | EP-A-0 026 301 (PREUSSAG) *Seite 1, Zeilen 1-6; Seite 6, Zeilen 1-15; Seite 8, Zeile 6 - Seite 9, Zeile 11; Seite 10, Zeile 22 - Seite 11, Zeile 10* | 1-3 | B 09 B 1/00 E 21 F 15/00 B 65 G 53/30 G 21 F 9/34 |
| Y | AU-B- 491 601 (SHELL) *Seite 2, Zeile 1 - Seite 6, letzte Zeile* | 1-3 | |
| Y | GB-A-1 443 930 (SHELL) *Insgesamt* | 1-3 | |
| A | US-A-3 108 439 (J.REYNOLDS) *Spalte 7, Zeilen 6-21* | 4 | |
| | ----- | | RECHERCHIERTE SACHGEBIETE (Int. Cl. ³) |
| | | | B 09 B B 65 G E 21 F G 21 F |

Der vorliegende Recherchenbericht wurde für alle Patentansprüche erstellt.

| Recherchenort | Abschlußdatum der Recherche | Prüfer |
|---|---|---|
| DEN HAAG | 05-12-1983 | LAVAL J.C.A |